(19) Europäisches Patentamt
European Patent Office
Office européen des brevets

(11) **EP 4 019 949 A1**

(12) **EUROPEAN PATENT APPLICATION**

(43) Date of publication:
**29.06.2022 Bulletin 2022/26**

(21) Application number: **20306696.4**

(22) Date of filing: **24.12.2020**

(51) International Patent Classification (IPC):
**G01N 22/00** (2006.01)    **G06F 17/16** (2006.01)

(52) Cooperative Patent Classification (CPC):
**G06F 17/16**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **INEL S.A.S**
**45410 Artenay (FR)**

(72) Inventor: **EL MENDILI, Anas**
**45410 ARTENAY (FR)**

(74) Representative: **Parlett, Peter Michael**
**Intellectual Property Department**
**Thermo Fisher Scientific (Bremen) GmbH**
**Hanna-Kunath-Strasse 11**
**28199 Bremen (DE)**

(54) **METHODS AND SYSTEM FOR MATERIALS CHARACTERIZATION USING MULTIPLE INSTRUMENTS AND DATA FUSION**

(57)    A method comprises: causing a sample to occupy each of a plurality of analysis positions, each corresponding to a respective analysis apparatus; with the sample at each position: determining at least one transfer matrix that describes a transport motion to the analysis position from a prior position and generating an analysis data set derived by analyzing the sample using the apparatus corresponding to the position, the data set comprising a respective array of scalar values at each analyzed location; using the transfer matrices, calculating a plurality of composite transformation matrices, each expressing sample coordinates as determined by a metrological apparatus or sensor in a local coordinate system of a respective one of the other analysis apparatuses; mapping, within each data set, apparatus-specific coordinates of a feature on the sample to the data; and constructing a composite data set comprising all of the arrays of scalar values that correspond to the feature.

EP 4 019 949 A1

**Description**

**Field of the Invention**

The present invention relates to non-contact analyses of samples. More particularly, the present invention relates to consolidation of sets of analytical data derived by analysis of a sample by multiple analysis apparatuses that conduct different types of non-contact analysis of the sample.

**Background of the Invention**

During characterization of samples of complex natural materials, it is often necessary to consolidate and correlate various sets of information derived from separate analysis apparatuses, herein referred to as "multi-analysis sample characterizations". In many situations, each sample may be analyzed at a plurality of separated points in or on the sample. Such analysis programs are herein referred to as "multi-point multi-analysis sample characterizations". Optimal information is obtained when the various analytical apparatuses measure complementary properties of the sample and when the resulting separate measurement results (i.e., local data sets) derived from a sample are combined into a single integrated data set. Such integration of separate measurement results, or blocks, into a single integrated set is referred to as data fusion (Cocchi, Marina. "Introduction: Ways and Means to Deal with Data from Multiple Sources." In Data Handling in Science and Technology, vol. 31, pp. 1-26. Elsevier, 2019). The fused local data sets may then be tabulated in databases, compared with one other, refined by further mathematical analysis, used for sample classification and modeling, etc. Existing multi-analysis sample characterization methods rely on either synchronized instrumental measurements together with manual data fusion and refinement or else automatic refinement that is either restricted to some particular instruments or that is made under certain assumptions about the samples being analyzed.

The relevance of any instrumental combination to a particular analysis scenario is dependent upon instrumental compatibility, complementarity and coordination. The usefulness of information extracted from the instrumental measurements depends on these factors as well as on the successfulness of the application of data fusion techniques. Subject to context, several different physicochemical properties can be targeted, examples of which are:

- elemental distribution by means of X-ray fluorescence (XRF) spectroscopy;
- crystalline phase distributions by means of X-ray diffraction (XRD) or Raman Spectroscopy;
- crystallographic orientation by means of Laue X-ray Diffraction;
- atomic bonds by means of infrared (IR) spectroscopy;
- surface metrology by means of a profilometer;
- morphology by means of an RGB Camera.

Information relating to the above-listed properties may differ in terms of:

- sampled volume of analysis, which varies with penetration depth and absorption properties;
- units of measurement, e.g., counts, frequency, energy, length, pixel, etc.;
- size effects, e.g., extensive (size-proportional) versus intensive (size-independent).

The various sets of measurements can also differ in terms of mathematical definition, for instance:

- consistency, e.g., pointwise/integral values (mean, standard deviation, integral of a signal);
- geometry, e.g., vector fields in local coordinate systems to transfer to a global coordinate system.

The various sensors that are involved in multi-analysis sample characterizations have different resolutions and the accuracy of each sensor, relative to the others, can depend on specific external conditions, such as environment and age. In addition, each sensor brings a unique extra contribution to the measurements in the form of a baseline signal or background noise.

To run combined analyses in which multiple points on each sample are analyzed by a plurality of analysis apparatuses, the data from the different sources should be defined according to a global framework with unique identifiers to each analyzed material point of each sample. Such a framework is necessary in order to implement data fusion in cases in which an experiment targets spatial description of objects defined by discrete or continuous set of points.

There are existing solutions to combine information measured by coordinated operation of multiple analytical apparatuses. Unfortunately, such solutions do not systematically perform combined data analysis. The existing solutions include:

- Solutions that incorporate instrumental combinations without any specific combining of data.
- Solutions that incorporate instrumental combinations together with strictly off-line processing. Subranges of solutions within this group are:

  ∘ Solutions with independent data refinements of measurements made by separate sensors.
  ∘ Solutions with dependent data refinement based on manually-driven fusion algorithms such as: reference points, patterns, calibration objects.
  ∘ Solutions with dependent data refinement based on semiautomatically-driven fusion algorithms using supervised learning.
  ∘ Solutions with dependent data refinement based on automatically-driven fusion algorithms invoking either an image registration method, unsupervised learning or both. This subrange of solutions can be upgraded to on-line processing, provided that one of the analysis apparatuses is capable of identifying the geometry of the samples. However, their lack of a model for the instrumental functions implies that they are only applicable to a limited set of instruments that can generate numerous and sufficiently diverse data to train a machine learning process.

- Solutions that incorporate instrumental combination with on-line processing. Subranges are:

  ∘ Integral solutions such as single measurements on random or sampled regions of an object, or multiple measurements to establish a statistical distribution descriptive of the complete object. Solutions within this subrange provide qualitative or semi-quantitative results.
  ∘ Point-wise solutions that include assumptions about the objects being analyzed, including at least one assumption relating to either geometry (1D, 2D, ordered 3D) or randomness (powder, pellet) or restrictions on instruments (2D images exclusively, spectra exclusively).

None of the existing solutions completely answers the need for an on-line data acquisition and consolidation technique that employs both a combination of analysis instruments as well as data fusion and that is able to produce a metric description of each given sample object under no material or statistical assumptions. This need is evident in the fields of mining, oil exploration and production, battery development and production, metallurgy, raw materials control, forensics, food safety, biomedicine, pharmaceuticals, etc.

Certain fields in the geological sciences are becoming increasingly reliant on multi-analysis sample characterizations combined with data fusion. Geological prospecting, soils characterization and drill-core analyses are three examples where such analyses are being employed. One pilot project in drill-core analysis that has been active since 2016 is the "sonic drilling coupled with automated mineralogy and chemistry" project (SOLSA), which has been carried out by a consortium of nine European-based industrial and academic partners, with partial funding provided by the European Union's Horizon 2020 research and innovation program under grant agreement No 689868. The stated goals of SOLSA are to investigate the combination of exploration, database management, instrumentation and software development, drilling rigs, analytical prototypes and marketing strategies. SOLSA is the first automated expert system for on-site cores analysis. The aim is to develop new or improved highly efficient and cost-effective, sustainable exploration technologies. Accordingly, the SOLSA project includes: (1) integrated drilling optimized to operate in the difficult lateritic environment with the challenge of a mixture of hard and soft rocks, extensible also to other ore types; and (2) fully automated scanner and phase identification software, usable as well in other sectors.

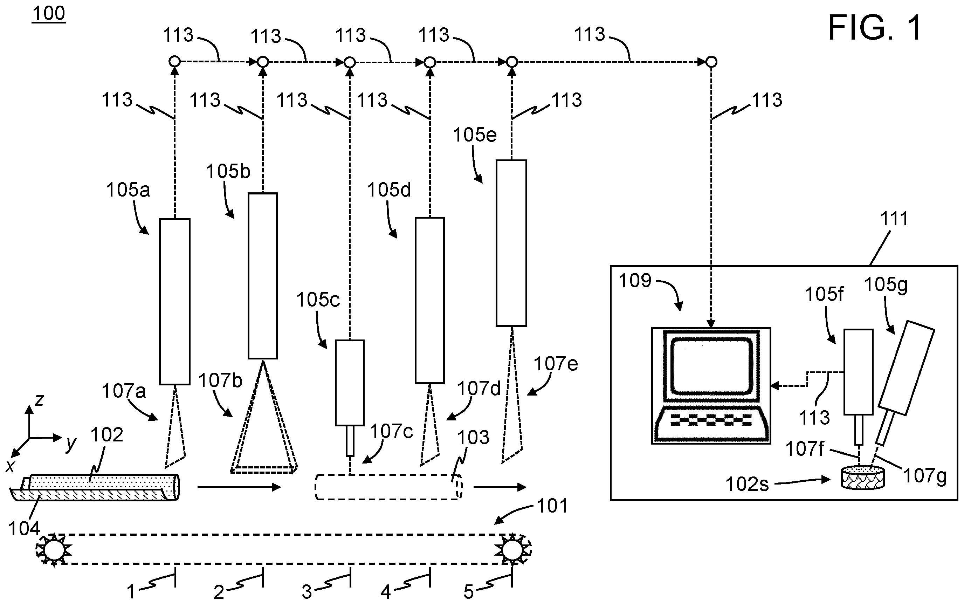

FIG. 1 is a schematic depiction of a potential outcome of SOLSA - a system 100 for real-time on-site compositional and phase characterization of samples that are provided as a continuous or nearly-continuous flux of samples. Although the illustrated exemplary system 100 that is shown in FIG. 1 is specifically directed to analysis of geological core samples, a similar system may be employed for the purpose of quality control monitoring and/or process monitoring of either raw material, intermediate product or finished product moving through a manufacturing process. In the illustrated system 100, a linear conveyance apparatus, such as a conveyor belt 101, continuously moves geological cores 102, 103 past analysis apparatuses 105a-105e, each of which obtain data in a non-contact and generally non-destructive fashion. In the illustrated system, the analytical apparatuses 105a, 105b, 105c, 105d and 105e obtain data relating to core sections as they move past analysis positions 1, 2, 3, 4 and 5, respectively. Although five such analysis apparatuses are depicted in FIG. 1, there is no specific limit to any particular number of analysis apparatuses. The cores may be supported on or within one or more carriages 104 as they move past the positions 1-5.

Since the analysis apparatuses 105a-105e do not make contact with the cores 102, 103, each such analytical apparatus operates by detecting particles that originate at the samples and that propagate across a gap between the sample and the apparatus. Thus, each of the analysis apparatuses 105a-105e is associated with a respective particle propagation zone (e.g., particle propagation zones 107a-107e) within which particles propagate from the core sample to the respective analysis apparatus. If one or more of the analysis apparatuses is a radioactive decay detector, then the detected particles may be alpha particles or beta particles. However, in most cases, the detected particles will be photons. Accordingly, photon detection is assumed in the remainder of this document and the particle propagation zones 107a-107e are hereinafter referred to as photon propagation zones. In some instances, the photon propagation zones may also be zones of illumination within which photons are caused to propagate from the analysis apparatus to the sample.

Optionally, one or more additional analytical apparatuses 105f, 105g may be provided in a mobile or temporary field laboratory 111 in order to provide the capability of performing additional analytical tests on core slices or other core samples 102s obtained from the cores 102, 103. The core slices or samples 102s may be taken from the cores at periodic time or core-length intervals and/or may be taken from selected portions of the cores based on data obtained from one or of the analysis apparatuses 105a-105e. Preferably, the mobile field laboratory, if present, comprises computer hardware 109, including computer memory storage and data processing capability, that is in communication with the analysis apparatuses 105f-105g by means of data communication lines 113.

Preferably, the set of analysis apparatuses includes a profilometer (e.g., analytical apparatus 105a) that measures and records the surface topography of each passing core section. A visible-light camera (e.g., analytical apparatus 105b) that creates a visual record of each such section may also be included. The photon propagation zone 107a corresponding to the profilometer 105a will generally include an outgoing beam or beams that illuminate the core surface as well as a set of returning rays comprising light that is reflected or scattered from the core surface. The photon propagation zone 107b corresponding to the visible-light camera 105b will comprise light reflected or scattered from the core surface and may also comprise illumination rays such as, for example, illumination rays from a flashlamp.

The profilometer and/or camera may create a permanent record of the physical configuration of the cores at the time of analyses that other measurements (e.g., measurements made by apparatuses 105b-105e and, if present, apparatuses 105f-105g) may be referenced against. Further, if geological bedding is observed in the core sections, the profilometer and camera may provide a record of the bedding orientation (e.g., geological strike and dip), provided that the orientation of the cores relative to map coordinates is preserved at the time of core extraction. The derived bedding orientation may then be used to extrapolate any interesting compositional, mineralogical, or other information generated by the set of analysis apparatuses 105a-105e and, if present, 105f-105f to other locations remote from the core extraction site.

Each one of the remaining analytical apparatuses (e.g., apparatuses 105c-105e and 105f-105g in the example system 100) is used to acquire specific information that may pertain to either chemical composition or mineralogical phase composition. The number and types of apparatuses that are employed are at the discretion of the user. Without limitation, the set of analysis apparatuses may include: a visible and near-infrared (VNIR) camera and/or spectrometer, possibly including an illumination source, that detects light wavelengths between approximately 400 and 1000 nanometers (nm); a short wave infrared (SWIR) camera and/or spectrometer, possibly including an illumination source, that detects light wavelengths between approximately 920 and 3000 nanometers; a Raman spectrometer and/or probe; a laser-induced breakdown spectroscopy (LIBS) spectrometer and/or probe; an X-ray diffraction (XRD) spectrometer; and an X-ray fluorescence spectrometer. The specific order of the analysis apparatuses need not be as shown in FIG. 1. The order and type of analytical apparatuses may be chosen according to the preferences of a user or operator. For example, a profilometer, if present, need not to be necessarily placed as first apparatus.

During real-time drill core characterization, it may be sometimes necessary to extract slices or pieces 102s of the core for additional detailed analyses that are carried out within the temporary field laboratory or other mobile laboratory 111. Because the analytical apparatuses 105a-105e only obtain information from the irregular exterior surface of the core, such additional detailed analyses may be necessary to prepare a flat surface for controlled analysis and to further characterize the bulk sample. The required sample preparation and additional analyses may be undertaken within the controlled environment of the field laboratory 111. It is desirable for the field laboratory to include both an X-ray diffraction apparatus and an X-ray fluorescence spectrometer because of the known complementarity of these two techniques. Combined X-ray diffraction and X-ray fluorescence analyses are described in a copending patent application titled "Apparatuses and methods for combined simultaneous analyses of materials" which was filed on the same date as the filing date of this application.

US Pat. No. 9,618,651 discloses systems and methods for analyzing an unknown geological sample. Disclosed embodiments provide a method for addressing the need for obtaining improved geological property information by combining data streams and/or results from multiple sensors, such as X-ray diffraction (XRD), X-ray fluorescence (XRF), Raman, Fourier Transform Infrared (FT-IR) spectroscopy, laser-induced breakdown spectroscopy (LIBS), Quantitative Evaluation of Minerals by SCANing electron microscopy (QEMSCAN), whole rock chemistry and near infrared (NIR) into a single multivariate calibration model. The system may include at least two analytical subsystems, and each of the at least two analytical subsystems provides different information about the geological sample. The local data sets from various analytic subsystems are combined for further analysis, and the system includes a chemometric calibration model that relates geological attributes from analytical data previously obtained from at least two analytical techniques. A prediction engine applies the chemometric calibration model to the combined analytical information from the geological sample to predict specific geological attributes in the unknown geological sample.

Leue et al. (Leue, Martin, Carsten Hoffmann, Wilfried Hierold, and Michael Sommer. "In-situ multi-sensor characterization of soil cores along an erosion-deposition gradient." Catena 182 (2019): 104140.) describe an efficient sampling and measurement method for easily obtainable soil driving cores with low-destructive preparation. Elemental contents and soil organic and mineral matter composition were measured rapidly and in large numbers using a multi-sensor approach, i.e., visible and near-infrared (Vis-NIR), diffuse reflectance infrared Fourier transform (DRIFT), and X-ray fluorescence (XRF) spectroscopy. The suitability of the approach with respect to three-dimensional soil landscape models was tested using soils along a slope representing different stages of erosion and deposition in a hummocky landscape under arable land use (Calcaric Regosols, Calcic Luvisols, Luvic Stagnosols, GleyicColluvic Regosols). The combination of soil core sampling, pedological description, and three spectroscopic techniques enabled rapid determination and interpretation of horizontal and vertical spatial distributions of soil organic carbon (SOC), soil organic and mineral matter composition, as well as $CaCO_3$, Fe, and Mn contents. Depth profiles for SOC, $CaCO_3$, and Fe contents were suitable indicators for site-specific degrees of erosion and matter transport processes at the pedon-to-field scale. Fe and Mn profiles helped identifying zones of reductive and oxidative domains in subsoils (gleyzation).

US Patent No. 8,630,314 describes an apparatus includes at least two devices that communicate with each other, wherein a first one of the at least two devices having an IEEE 1588 precision time protocol interface, the interface including one or more components configured for communications in both a wired manner and a wireless manner with a second one of the at least two devices. The second one of the at least two devices having an IEEE 1588 precision time protocol interface, the interface including one or more components configured for communications in both a wired manner and a wireless manner with the first one of the at least two devices. Wherein one of the at least two devices includes a master clock and the other one of the at least two devices includes a slave clock, wherein the master clock communicates a time to the slave clock and the slave clock is responsive to the communicated time from the master clock to adjust a time of the slave clock if necessary to substantially correspond to the time of the master clock, thereby time synchronizing the at least two devices together.

International patent application publication WO2019/213012A1 describes a wearable device operably worn by a user for monitoring musculoskeletal loading on structure inside the body of the user. The device includes a plurality of sensors, each sensor operably worn by the user at a predetermined location and configured to detect information about a biomechanical activity of musculoskeletal tissues, a limb segment orientation, and/or a loading magnitude or location thereon; and a processing unit in communication with the plurality of sensors and configured to process the detected information by the plurality of sensors to estimate the musculoskeletal loading, and communicate the estimated musculoskeletal loading to the user and/or a party of interest.

US Patent No. 9,117,133 describes an apparatus for analyzing a subject including a hyperspectral image module is provided. The apparatus is used to identify a suspect region of a subject by using a hyperspectral sensor (for obtaining a hyperspectral image of the subject), a control computer including a processor unit (PU) and a computer readable memory (CRM) (for controlling and is in electronic communication with the sensor), a control software module including instructions stored in the CRM and executed by the PU (for controlling said at least one operating parameter of the sensor), a spectral calibrator module including instructions stored in the CRM and executed by the PU (for applying a wavelength dependent spectral calibration standard constructed for the sensor to a hyperspectral image), and a light source for illuminating the subject. An optional contact probe module is used to collect a signal of the suspect region for medical diagnosis. Specifically provided are systems and methods that enable the diagnosis of a medical condition in a subject using spectral medical imaging data obtained using any combination of sensor such as a LIDAR sensor, a thermal imaging sensor, a millimeter-wave (microwave) sensor, a color sensor, an X-ray sensor, a UV sensor, a NIR sensor, a SWIR sensor, a MWIR sensor, a LWIR sensor, and/or a hyperspectral image sensor.

US Patent No. 9,746,559 describes a method for measuring and registering 3D coordinates that has a 3D scanner measure a first collection of 3D coordinates of points from a first registration position and a second collection of 3D coordinates of points from a second registration position. In between these positions, the 3D scanner collects 2D camera images. A processor determines first and second translation values and a first rotation value based on the 2D camera images. The processor adjusts the second collection of points relative to the first collection of points based at least in part on the first and second translation values and the first rotation value. The processor identifies a correspondence among registration targets in the first and second collection of 3D coordinates, and uses this correspondence to further adjust the relative position and orientation of the first and second collection of 3D coordinates. A measuring device has a 3D scanner and a two-dimensional (2D) camera. The camera may be an integral part of the 3D scanner or a separate camera unit. The 3D measuring device is used in two modes, a first mode in which the 3D scanner obtains 3D coordinates of an object surface over a 3D region of space and a second mode in which camera images are obtained as the camera is moved between positions at which 3D scans are taken. The 2D camera images are used together with the 3D scan data from the 3D scanner to provide automatic registration of the 3D scans.

US Patent 8,736,817 describes an interchangeable chromatic range sensor probe for a coordinate measuring machine. The chromatic range sensor probe is capable of being automatically connected to a coordinate measuring machine under program control. In one embodiment, in order to make the chromatic range sensor probe compatible with a standard coordinate measuring machine auto exchange joint, all chromatic range sensor measurement light transmitting and receiving elements (e.g., the light source, wavelength detector, optical pen, etc.) are included in the chromatic range sensor probe assembly. The chromatic range sensor probe assembly also includes an auto exchange joint element that is attachable through a standard auto exchange joint connection to a coordinate measuring machine. In one embodiment, in order to provide the required signals through the limited number of connections of the standard coordinate measuring machine auto exchange joint (e.g., 13 pins), a low voltage differential signaling serializer may be utilized for providing additional control and data signals on two signal lines.

US Patent No. 9,976,852 describes a system including an environment for programming workpiece inspection operations for a coordinate measurement machine. The environment includes a user interface comprising a program simulation portion configured to display a 3D view of the workpiece and/or representations of inspection operations to be performed on the workpiece. The user interface further includes auxiliary collision avoidance volume (CAV) creation elements that create CAVs that are represented in the 3D view. The 3D CAVs and/or their representations have integrated graphical modification properties which are controllable in the user interface. The modification properties are activated by selection of a face of the CAV representation, without the explicit activation of a separate modification control element mode or tool. This results in a simplified and intuitive user interface. Users perform a constrained set of graphical modifications in the 3D view using an input device, to modify a CAV.

US Patent No. 10,373,339 describes a method for determining structure from motion in hyperspectral imaging that includes acquiring hyperspectral data cubes containing intensity data, the intensity data being stored in dimensions of the hyperspectral data cube including a first spatial dimension, a second spatial dimension, and a spectrum dimension; establishing a set of baseline spectral features from a data cube for tracking between data cubes; establishing a set of standard features from a data cube for tracking between data cubes; matching, between data cubes, respective baseline features and standard features; and extracting imaging device motion information based on relative positions of matched baseline and standard features.

Fan et al. (Fan, Shuxiang, Changying Li, Wenqian Huang, and Liping Chen. "Data fusion of two hyperspectral imaging systems with complementary spectral sensing ranges for blueberry bruising detection." Sensors 18, no. 12 (2018): 4463.) describe investigation of a push broom based hyperspectral imaging system and a liquid crystal tunable filter (LCTF) based hyperspectral imaging system with different sensing ranges and detectors in order to jointly detect blueberry internal bruising in the lab. The mean reflectance spectrum of each berry sample was extracted from the data obtained by two hyperspectral imaging systems respectively. The spectral data from the two spectroscopic techniques were analyzed separately using a feature selection method, partial least squares-discriminant analysis (PLSDA), and support vector machine (SVM), and then fused with three data fusion strategies at the data level, feature level, and decision level. The three data fusion strategies achieved better classification results than using each hyperspectral imaging system alone. The authors suggest that the two hyperspectral imaging systems with complementary spectral ranges, combined with feature selection and data fusion strategies, could be used synergistically to improve blueberry internal bruising detection.

Uchic (Uchic, Michael D. "Serial sectioning methods for generating 3D characterization data of grain-and precipitate-scale microstructures." In Computational methods for microstructure-property relationships, pp. 31-52. Springer, Boston, MA, 2011.) provides an overview of the current state-of-the-art for experimental collection of microstructural data of grain assemblages and other features of similar scale in three dimensions (3D). The chapter focuses on the use of serial sectioning methods and associated instrumentation, as this is the most widely available and accessible technique for collecting such data for the foreseeable future. Specifically, the chapter describes the serial sectioning methodology in detail, focusing in particular on automated systems that can be used for such experiments, highlights possibilities for including crystallographic and chemical data, provides a concise discussion of the post-experiment handling of the data, and identifies current shortcomings and future development needs for this field.

**Summary of the Invention**

Herein is disclosed a novel methodology to combine analyses from scale-compatible instruments and to perform on-line data fusion towards refinement. The new methodology, which is applicable to measurements of sample objects of any given geometry utilizes a holistic strategy of combined systems in which the individual instruments and the object to analyze are defined in a unique global reference system of coordinates assigned to the combined ensemble. Data obtained by each analytical instrument is also referenced to this same global coordinate system by means of a respective instrumental function. Specifically, each data set inherits a local coordinate system from the corresponding instrument; the corresponding instrumental function assigns units to each of the dimensions of the local coordinate system (counts, pixels, reflectance, and so on). Within this reference system, an experimental procedure comprising a set of "multi-analysis sample characterizations" or a set of "multi-point multi-analysis sample characterizations" of a sample object is decomposed into (1) a sequence of rigid motions to place the sample object, in a predefined order, in given positions, where each position corresponds to analysis by a respective analysis apparatus, and (2) a set of effective measurements and data acquisitions at given timestamps, each measurement/data acquisition and timestamp corresponding to a respective analysis apparatus, all steps of which are controlled and synchronized. The object and the analysis apparatuses are assigned with local coordinate systems descriptive of their position in real-time during the experiment. Data obtained by each instrument is also referenced to its local coordinate system through a respective specific instrumental function. Therefore, the problem of fusion of data from multiple analysis apparatuses is transformed into one of 3D geometrical operations with instrumental parameters.

Preferred methods and systems in accordance with the present teachings include the following features:

(A). Defining, for each analysis apparatus, a respective "instrumental function" which expresses the ability of the analysis apparatus to produce a data set corresponding to the region of the physical object placed within its analysis field or at its analysis position. Each instrumental function includes factors that may be specific to each instrument, such as one or more of calibration, sensitivity, resolution, baseline correction, noise level, etc. The instrumental function maintains a logical connection, in subsequent data fusion operations, between each segment of acquired data and its source (the instrument) and its root (the object);

(B). Employing at least one metrological apparatus or sensor, such as a profilometer or camera, among the data analysis apparatuses in order to define the geometry of each object and the locations of analyzed points on the object according to at least the maximum number of dimensions needed by other instruments in the combination. For instance, a sample object may be defined as a 1-, 2- or 3-manifold, respectively, for linear, surface or volume analysis. Each metrological apparatus or sensor provides spatial descriptions of sample objects in metric coordinates. In some instances, a translation stage or rotation stage that supports a sample in a sample holder may be considered to be a metrological apparatus that monitors sample position and motion through a set of Cartesian or Eulerian coordinates. Each metrological apparatus or sensor has a specially-defined instrumental function which, for each metrological apparatus or sensor equals the identity operator.

Using the knowledge of instrumental functions and the data generated by the metrological apparatuses or sensors, it is possible to construct data fusion operators to map each material point being analyzed in the sample object to its different corresponding data. Novel methods in accordance with the present teachings comprise building the theoretical data fusion operators online in the global coordinate system of the combined ensemble, based on features (A) and (B). This novel methodology allows straightforward correlation, study and combined analysis, since the fused data are defined in a unique metric frame.

According to a first aspect of the present teachings, a method of sample analysis comprises:

causing a sample to occupy, in sequence, each of a plurality of analysis positions, each of which is a position at which a respective analysis apparatus is configured to conduct an analysis of the sample, wherein one of the analysis apparatuses comprises a metrological apparatus or sensor;
with the sample at each analysis position of the plurality of analysis positions:

determining at least one rigid transfer matrix that describes a transport motion to the analysis position from a prior analysis position or from an initial sample position;
generating an analysis data set derived by conducting an analysis of a plurality of locations on or of the sample using the analysis apparatus that corresponds to the analysis position, the analysis data set comprising a respective array of scalar values corresponding to each one of the analyzed locations;

using the rigid transfer matrices, calculating a plurality of composite transformation matrices, each composite transformation matrix effecting, by matrix multiplication, the expression of sample coordinates as determined by the metrological apparatus or sensor in the local coordinate system of a respective one of the other analysis apparatuses;
within each data set, mapping local apparatus-specific coordinates of a feature on the sample to data in said data set that corresponds to the feature; and
constructing a composite data set comprising all of the arrays of scalar values corresponding to the plurality of mapped local apparatus-specific coordinates that correspond to the feature.

According to some embodiments, the step of causing the sample to occupy, in sequence, each of the plurality of analysis positions comprises repeatedly moving the sample relative to a set of fixed-position analysis apparatuses. According to some other embodiments, the step of causing the sample to occupy, in sequence, each of the plurality of analysis positions comprises repeatedly moving a set of moveable analysis apparatuses relative to the sample which is fixed. According to some other embodiments, the step of causing the sample to occupy, in sequence, each of the plurality of analysis positions comprises moving the sample at least one time and moving an analysis apparatus at least one time.

According to some embodiments, the metrological apparatus or sensor comprises a profilometer. According to some embodiments, the moving of the sample into the plurality of analysis positions is performed by a continuous movement of the sample by a translation apparatus, for example a linear conveyance apparatus. In such instances, the sample may be a portion of a continuous stream of sample material that is moved, in sequence, into the plurality of analysis positions by the translation apparatus. If the metrological apparatus or sensor comprises a profilometer, the profilometer may be configured to generate coordinates of the sample that are referenced to the moving stream of sample material.

According to some embodiments, the method further comprises comparing the composite data set to a similarly derived composite data set corresponding to a second feature on or of the sample. According to some other embodiments, the method further comprises comparing the composite data set to entries in a database of similarly-derived composite data sets.

According to some embodiments, the step of moving the sample into a plurality of analysis positions comprises moving the sample into position for analysis by one or more of the group consisting of: a visible and near-infrared camera that detects light wavelengths between approximately 400 and 1000 nanometers, a visible and near-infrared spectrometer that detects light wavelengths between approximately 400 and 1000 nanometers, a short wave infrared camera that detects light wavelengths between approximately 920 and 3000 nanometers, a red-green-blue (RGB) camera that detects visible light, and a short wave infrared spectrometer that detects light wavelengths between approximately 920 and 3000 nanometers.

According to some embodiments, the step of moving the sample into a plurality of analysis positions comprises moving the sample into position for analysis by one or more of the group consisting of: a Raman spectrometer and a laser-induced breakdown spectroscopy spectrometer.

According to some embodiments, the step of moving the sample into a plurality of analysis positions comprises moving the sample into position for analysis by one or more of the group consisting of: an X-ray diffraction (XRD) spectrometer; and an X-ray fluorescence (XRF) spectrometer.

According to some embodiments, the step of moving the sample into a plurality of analysis positions comprises moving the sample away from the linear conveyance apparatus and into a mobile laboratory for analysis therein.

According to some embodiments, the moving of the sample into the mobile laboratory for analysis comprises moving the sample into position for X-ray diffraction analysis and/or X-ray fluorescence analysis.

**Brief Description of the Drawings**

In order to best understand the features and advantages of the teachings of this disclosure, the reader is referred to the appended drawings, which are to be viewed in conjunction with the detailed description of certain examples provided below. Understanding that these drawings depict only exemplary embodiments of the invention and are not therefore to be considered to be limiting in scope, the examples will be described and explained with reference to the accompanying drawings in which:

FIG. 1 is a schematic depiction of a system for real-time on-site compositional and phase characterization of samples that are provided as a continuous or nearly-continuous flux of samples;

FIG. 2 is a schematic depiction of the various translational and orientational rigid motions that may apply to a sample undergoing transfer between multiple analysis apparatuses at various times, the transformation matrices utilized to describe such motions and the instrumental functions that are used to associate sample locations with instrumental data, in accordance with the present teachings;

FIG. 3 is a schematic depiction of the correlation of the locations of a single sample feature of interest, in accordance with the present teachings, within the various coordinate systems of different local data sets generated by different respective analytical apparatuses;

FIG. 4 is a flow diagram of a method in accordance with the present teachings;

FIG. 5 is an equation for transformation of coordinates of a reference frame of an object that is rotated about Z, X and Y axes, in that order, by angles of $\alpha_Z$, $\alpha_X$ and $\alpha_Y$, respectively;

FIG. 6 is a set of equations describing coordinate transformation matrices for each of three different apparatus reference frames, where the transformations occur between a first time, $t_1$, and a subsequent time, $t_2$;

FIG. 7 is an equation and an operator definition, in accordance with the present teachings, of a coordinate transformation from a frame of reference of a first apparatus at a first time, $t_1$, to a frame of reference of a second apparatus at a subsequent time, $t_2$;

FIG. 8 is a graph showing separate plots of time versus position of a leading edge and a trailing edge of a sample, as it moves through an analysis system in accordance with some embodiments of the present teachings; and

FIG. 9 is a schematic depiction of a hypothetical layer of data as may be generated by a one-dimensional camera apparatus that may be incorporated into an analysis system in accordance with the present teachings.

**Detailed Description of the Invention**

According to existing strategies for fusing local data sets from a plurality of analysis apparatuses, one data set is labelled as a reference and assigned global coordinates and other data sets are assigned local coordinates. Then, data fusion consists of assembly of transformation operators from local to global systems of coordinates. Such a strategy focuses solely on the data that is output from the apparatuses. In contrast, the strategy of the herein-disclosed methodology is holistic. In other words, each item of information within a measurement remains associated with the analysis apparatus (i.e., the data source) from which it was generated as well as with the sample object or point on the sample object (i.e., the data root) from which the data was obtained. Since a single experiment creates both a time and a space dependency between the analysis apparatuses, the sample objects (and/or sample points) and the data, a global reference system of coordinates is assigned to the combined ensemble of known and acquired information relating to the experiment. In this ensemble, the individual analysis apparatuses, the sample objects/points and the data are all components assigned respectively with local coordinates. Accordingly, data fusion becomes a three-dimensional geometrical problem that includes instrumental parameters.

In accordance with the present teachings, the entire logical combination of data, data source (analysis apparatus) and data root (sample object) are defined by a global reference system. It is assumed that, during an experiment, the global reference is known. Each analysis apparatus has a respective unique local coordinate system that is assigned to it and the collection of local coordinate systems are also assumed to be known during an experiment. The local coordinate systems need not be constant; it is only necessary for any changes in the local coordinate systems to be monitored and accounted for. For example, some analysis apparatuses may have embedded gyroscopes and/or accelerometers that allow real-time control and monitoring of the local reference frames, thus obviating any requirement for the local reference frame to remain constant. Each analysis apparatus generates data through a pre-determined instrumental function, the definition of which includes the various physical properties of the apparatus. During an experiment, each instrumental function is assumed to be known and, because of instrumental stability, is also assumed to be stable (reproducible).

Likewise, each sample object that is to be analyzed or that is to have analyses conducted upon it has a respective unique local coordinate system that is assigned to it. Each sample object local coordinate system is assumed to be fully determined at all times during which an analysis or analyses of it are being performed. The sample object can undergo any rigid motion necessary for its placement into position for an analysis by any given instrument, and this motion is fully determined in terms of one or more rotation angles (Euler angles) and/or translation components, or in terms of an equivalent tensor. Furthermore, each local data set is defined in its own local coordinate system that is independent from other local systems and that is a sole function of the respective instrumental function.

During an experiment, the various analysis apparatuses analyze a sample object either simultaneously or sequentially, in a predefined order, and either statically or dynamically, at given timestamps and positions with respect to the global reference system. Sample positioning is controlled in space and time and is synchronized with data acquisition. In accordance with the present teachings, the ensemble of analysis apparatuses comprises at least one instrument (i.e., a metrological apparatus or sensor) that is able to describe the sample object in accordance with a metric reference system of coordinates. This description is of a manifold whose dimension (e.g., one-dimensional, two-dimensional or three-dimensional) depends on the experiment and/or the capabilities of the analysis apparatuses. As a corollary to this statement, the instrumental function of each metrological apparatus or sensor is the identity operator. Within the ensemble of analysis apparatuses, the metrological apparatus(es) or sensor(s) can be placed at any position. Equivalently, if the analysis apparatuses are arranged so that analyses of the sample object are in a predefined order (e.g., FIG. 1), then the metrological apparatus(es) or sensor(s) can be placed such that the metrological description of the sample object occurs anywhere within the order of analyses. A profilometer that analyses surface topography by an interferometric technique is an example of an active metrological apparatus. Alternatively, a translation or rotation stage may be considered to be a passive metrological apparatus in situations in which the description of the metric coordinate system is not generated by the translation or rotation stage but is instead intrinsic to the data acquisition process. Accelerometers and optical encoders may be considered as examples of metrological sensors. Systems in accordance with the present teachings may include any combination and any number of such apparatuses, as necessary.

According to preferred embodiments, each experiment comprises two stages:

1. a controlled trajectory of the sample object relative to static analysis apparatuses, of one or more analysis apparatuses relative to the static sample object, or of both the sample object and at least one analysis apparatus matching the ordered positions of analysis, and

2. data acquisition in the predefined order by each analysis apparatus. The trajectory of the sample object and/or one or more analysis apparatuses is known in terms of a time-displacement record in the global reference system.

The data acquisition step includes analysis by at least one metrological apparatus or sensor. The metrological sensor(s) provide(s) the base data for data fusion. In accordance with the present teachings, a data fusion operator is defined which is a function assigning each material point of the sample object from the base data to its corresponding data from the $j^{th}$ analysis apparatus. The data fusion operator, $\mathcal{F}_{k \to j}$, where $k$ is the index of the metrological apparatus or sensor, maps the base data to a given local data set noted $D_j$ of analysis apparatus $j$. Each data fusion operator is a mathematical composition of the respective instrumental function $\varphi_j$ with the geometric operators of rigid motions transferring the coordinates of the object from the local system of the metrological apparatus or sensor to the local system of the given analysis apparatus.

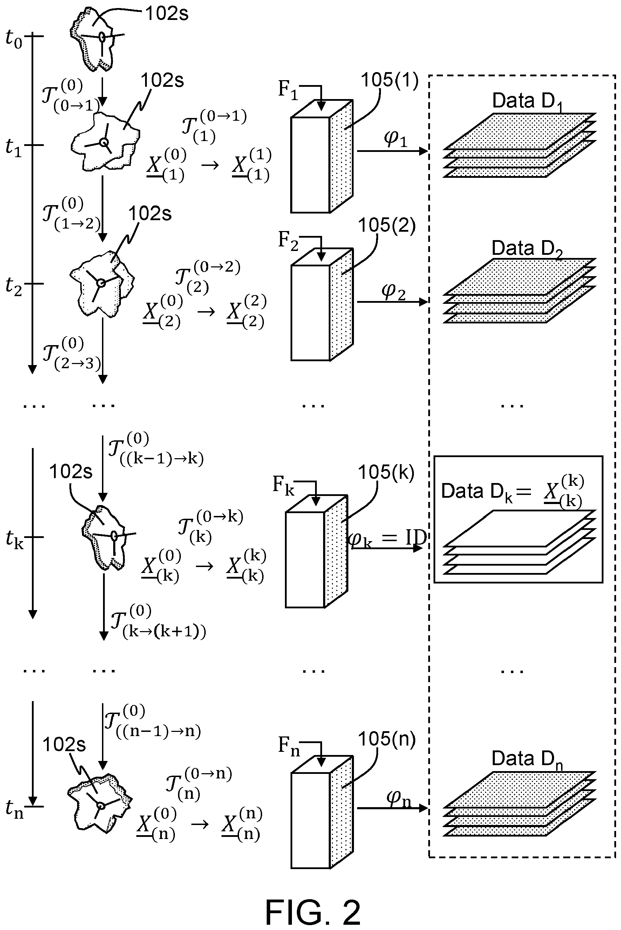

The operation, according to preferred embodiments of the present teachings, of an analysis system comprising multiple analysis apparatuses, may be better understood with reference to FIG. 2. This figure schematically depicts an analysis system comprising n analysis apparatuses, identified as analysis apparatuses 105(1) through 105(n). At least one of the analysis apparatuses, apparatus 105(k), is a metrological apparatus or sensor. As noted above, the metrological apparatus or sensor may be disposed at any suitable position within a series of analysis apparatuses. In operation of the analysis system, a respective analysis of sample object 102s is performed, in sequence, by each analysis apparatus 105(1) through 105(n) at experiment times, $t_1$ through $t_n$, all of which are referenced to an initial experiment start time, $t_0$. The analyses performed by analysis apparatuses 105(1) through 105(n) produce n local data sets $D_1$ through $D_n$, as shown in FIG. 2.

Each analysis apparatus is associated with a respective set of operational parameters, $F_1$ through $F_n$. In the general case, let $F_j$ be the set of operational parameters associated with the $j^{th}$ analysis apparatus. Such parameters may relate to at least one of instrument sensitivity, resolution, accuracy, etc. The values of the parameters, which are unique to each analysis apparatus, may be utilized as inputs in the generation of a respective instrumental function, $\varphi_1$ through $\varphi_n$. In the general case, let $\varphi_j$ be the instrumental function associated with the $j^{th}$ analysis apparatus. The various instrumental functions may be used as a basis for consistent normalization of the numerical results within the various local data sets. However, the instrumental function, $\varphi_k$, of the metrology apparatus 105(k) is set as the identity operator.

Either as a result of experimental choices or of various physical constraints, such as space constraints, sample holder constraints, etc., the sample object 102s may need to be physically moved between consecutive analyses. In some instances, the movement may comprise a simple linear translation between sample analysis positions, without sample rotations, such as the movements between analysis positions 1-5 depicted in FIG. 1. In many other situations, as is indicated in FIG. 2, the movement of the sample object 102s from one analysis position to another may include one or more rotations about one or more internal axes. Provided that all such movements are rigid-body motions, for example rigid-body translations and/or rigid-body rotations, and also provided that any changes in sample orientation between analyses are known relative to an apparatus coordinate system, the changes in sample orientation may be consistently related to a local sample coordinate system that is established by the data $D_k$ provided by metrological apparatus or sensor 105(k). More generally, the knowledge of changes in sample orientation can be related to any local coordinate system of an apparatus since these are monitored continuously in time. According to the embodiment of the invention that is depicted in FIG. 2, the choice is made to relate all such motions to the global reference frame of the ensemble referred to with the index 0.

In the general case, let $\underline{X}_{(i)}^{(j)}$ represent the coordinates matrix at time $t_i$ expressed in the coordinate system of the $j^{th}$ analysis apparatus. Also, let

$$\mathcal{T}_{(i \to i')}^{(j)}$$

represent the rigid motion transfer matrix corresponding to time change from $t_i$ to $t_{i'}$ written in the coordinate system of the $j^{th}$ analysis apparatus and let

$$\mathcal{T}_{(i)}^{(j \to j')}$$

represent the rigid motion transfer matrix at time $t_i$ from the coordinate system analysis apparatus $j$ to the coordinate system of analysis apparatus $j'$. In each case, the indices $i$ and $j$ are constrained as follows:

$$0 \leq i, i' \leq n; \qquad 0 \leq j, j' \leq n$$

Initial conditions at time, $t_0$, are referenced by either $i = 0$ or $i' = 0$. The global reference coordinate system of the ensemble, standing conceptually as "instrument 0", is referenced by either $j = 0$ or $j' = 0$. The inverse transformations are represented as:

$$\mathcal{T}_{(i \to i')}^{(j)} = \mathcal{T}_{(i' \to i)}^{(j)}{}^{-1} \qquad\qquad \text{Eq. 1a}$$

and

$$\mathcal{T}_{(i)}^{(j \to j')} = \mathcal{T}_{(i)}^{(j' \to j)}{}^{-1}. \qquad\qquad \text{Eq. 1b}$$

A respective so-called "fusion operator" $\mathcal{F}_{k \to j}: \underline{X}_{(k)}^{(k)} \mapsto D_j$, is defined for each local data set $D_j$, $(j \neq k)$, where $\mathcal{F}_{k \to j}$ maps coordinate data from the $k^{\text{th}}$ instrument acquired at time $t_k$, defined beforehand as the base data, to local data $D_j$. The fusion operator is given by the composite function:

$$\mathcal{F}_{k \to j} = \varphi_j \circ \left[ \mathcal{T}_{(j)}^{(0 \to j)} \circ \mathcal{T}_{(k \to j)}^{(0)} \circ \mathcal{T}_{(k)}^{(k \to 0)} \right] \qquad\qquad \text{Eq. 2}$$

in which the symbol "∘" is the composite-function operator and wherein the transfer matrix,

$$\mathcal{T}_{(k \to j)}^{(0)},$$

is calculated as a matrix product as follows:

$$\mathcal{T}_{(k \to j)}^{(0)} = \mathcal{T}_{(k \to k+1)}^{(0)} \cdots \mathcal{T}_{(j-2 \to j-1)}^{(0)} \mathcal{T}_{(j-1 \to j)}^{(0)} \qquad (k < j) \qquad \text{Eq. 3a}$$

$$\mathcal{T}_{(k \to j)}^{(0)} = \mathcal{T}_{(k \to k-1)}^{(0)} \cdots \mathcal{T}_{(j+2 \to j+1)}^{(0)} \mathcal{T}_{(j+1 \to j)}^{(0)} \qquad (k \geq j) \qquad \text{Eq. 3b}$$

The rightmost transfer matrix,

$$\mathcal{T}_{(k)}^{(k \to 0)},$$

in Eq. 2 converts coordinates of features of a sample that are observed by the metrological apparatus or sensor (the $k^{\text{th}}$

analysis apparatus) at time point $t_k$ into coordinates within the coordinate system of the reference frame at the same time point. The next leftward transfer matrix,

$$\mathcal{T}_{(k \to j)}^{(0)},$$

translates the so-converted coordinates into the coordinate system of the reference frame at time $t_j$. The leftmost transfer matrix within the brackets,

$$\mathcal{T}_{(j)}^{(0 \to j)},$$

converts the so-transferred coordinates from the coordinate system of the reference frame into the coordinate system of the $j^{th}$ instrument at the time $t_j$, at which that analysis apparatus is analyzing the sample. Finally, the instrumental function $\varphi_j$, creates an association between the coordinate matrix $X_{(j)}^{(j)}$ in the coordinate system of the $j^{th}$ analysis apparatus at the time, $t_j$, and newly-measured instrumental data, $D_j$, pertaining to the corresponding region of the sample.

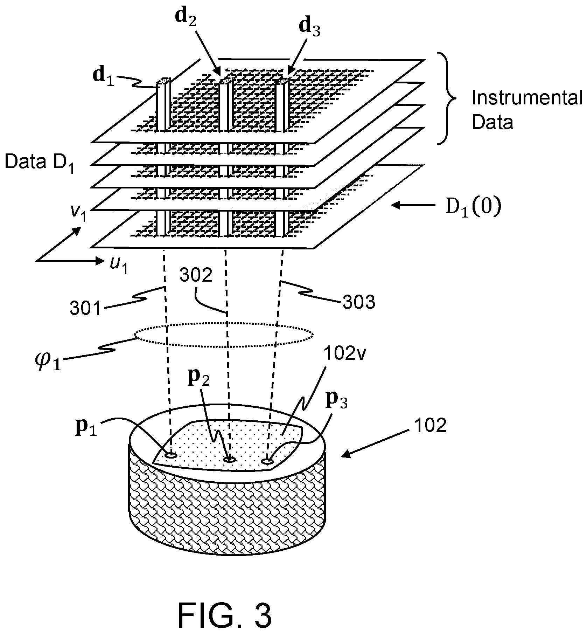

The instrumental data provided by the instrumental function, $\varphi_j$, is an array of scalar variables and parameters, as is schematically represented, in FIG. 3, by the set of planes and grid patterns of the example local data set $D_1$ that are labeled as "Instrumental Data". In this example, unless explicitly specified otherwise, it is assumed that the analysis apparatus that generates the data, $D_1$, is not a metrological apparatus or sensor. Most of the scalars are raw data obtained by the operation of the analysis apparatus. For example, an infrared reflectance spectrometer creates an array of measured values, wherein each value relates to an intensity of reflected infrared light at a respective wavelength. Generally, the scalar values also comprise various operational parameters that may relate to respective apparatus and experiment properties, such as but not limited to: resolution, accuracy, temperature, baseline signal, calibration values, applied voltage, intensity of incident light, and the like. The various parameters may be used in the correction of raw measurements into information about the sample being measured. The data from a metrological apparatus or sensor may include values that are specific to that component. For example, if a profilometer is employed as a metrological apparatus, the data may include scalar values relating to additional variables, such as: intensity of reflection, width, threshold, profile order, idle times, integral value around reflection and the center of mass of a reflection.

A necessary information provided in each instrumental data set is the timestamp, which is essential to relate the coordinates of points positioned in the field of view of the instrument at time $t_i$ to their unique data at time $t_i$ as explained above in terms of an instrumental function. The timestamps are also important for identifying situations in which there is a gap or malfunction in the data acquisition, thereby producing a gap or other irregularity in the timestamps. In such situations, data acquisition software may provide a timestamp having an empty value and/or an optional warning/error message.

The local data set $D_1$ may also include a local coordinate system, which may be represented by its own data plane, such as the data plane $D_1(0)$ depicted in FIG. 3. The local coordinate system may be linear, two-dimensional or, in rare instances, three dimensional. Except in the specific case that the analysis apparatus that generates the data $D_1$ is a metrological sensor, the local coordinate system does not represent spatial coordinates. Instead, the system of units of the local coordinate system is generally unique to the analysis apparatus that generates the data. Generally, the units of each local coordinate system pertain to the type of and logical organization of data generated by the respective analysis apparatus. For example, if the analytical apparatus is a one-dimensional camera that repeatedly generates line scans across a sample that continuously moves through its field of view, then the local coordinate system may be organized in terms of a two-dimensional array having the dimensions of "pixel number" and "time of scan". For simplicity, it is assumed, in the example of FIG. 3, that the local coordinate system is a two-dimensional coordinate system that may be represented by the data plane $D_1(0)$ and by a coordinate grid depicted on that plane in the generalized units of $u_1$ and $v_1$. Generalized units of $u_2$, $v_2$, $w_2$,...; $u_3$, $v_3$, $w_3$, ...; etc. may be used to refer to the local coordinate systems for other analysis apparatuses in a system. The grid may be of any type, e.g., Cartesian, linear, curvilinear, uniform, non-uniform, etc. If the analysis apparatus is part of a multi-analysis sample characterization system that includes a profilometer that provides a three-dimensional depiction of the sample, then the two-dimensional coordinates on the data plane $D_1(0)$ may refer to a projection of the 3D spatial positions onto the plane. In such a case, another data plane, let say $D_1(1)$, would provide the coordinates of the third spatial dimension in function of the first two dimensions.

Because local coordinate systems do not contain spatial information, the instrumental function, $\varphi_1$, is used to map each physical point or points set on or from the sample, as expressed in the local coordinate system of the analysis apparatus of index 1, to a point on the data coordinate grid $D_1(0)$. For example, FIG. 3A schematically depicts a sample 102 from which the data $D_1$ is generated. The field of view 102v of the analysis apparatus that generates the data $D_1$ may or may not correspond to the available surface area of the sample 102 and will vary from apparatus to apparatus depending on differing capabilities and hardware configurations of the various analysis apparatuses. Further, the field of view 102v may not conform to a simple shape as a result of distortions caused by optics, curved sample surfaces and other physical parameters. Thus, each analysis apparatus may correspond to a respective unique mapping of sample coordinates to local apparatus coordinates. For example, FIG. 3, shows a hypothetical mapping of sample points, $\mathbf{p}_1$, $\mathbf{p}_2$ and $\mathbf{p}_3$ to specific data vectors $\mathbf{d}_1$, $\mathbf{d}_2$ and $\mathbf{d}_3$, respectively via the specific point mappings 301, 302 and 303. It is assumed that each grid point in the data $D_1$ maps to a specific region of the sample. The collection of all such mappings is the instrumental function $\varphi_1$, which creates, for the first analysis apparatus, an association between features of the sample and the local data set $D_1$.

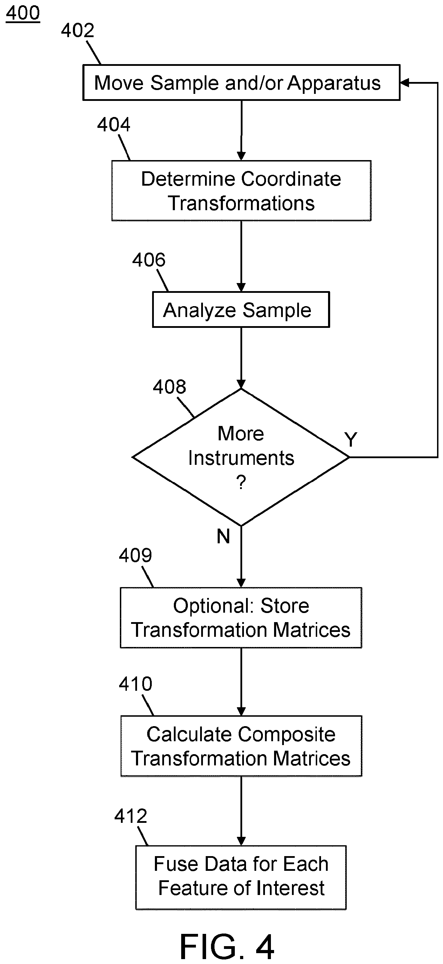

FIG. 4 is a flow diagram of a method for multi-analysis sample characterization in accordance with the present teachings. The method 400 that is diagrammed in FIG. 4 pertains to analysis experiments in which a respective analysis of a sample object is performed by each one of a plurality of analysis apparatuses, hereinafter referred to as "instruments", at least one of which is an active metrological apparatus, such as a profilometer, or a passive metrological sensor, such as a translation stage. Examples of suitable sample objects are rock specimens, geological core samples, non-fissile soil samples, pelletized powders, manufactured articles, etc. The metrological apparatus or sensor produces a map of the topology, in metric coordinates, of the sample and/or of features on or of the sample. In many experimental setups, the sample may be moved, between analyses from one instrument to a next instrument in a sequence of instruments, as is illustrated in FIG. 1. The sample may be moved by a linear conveyor as shown in FIG. 1, or by some other type of robotic apparatus, such as a transport arm. In some less-preferable situations, the sample may be moved manually, provided that an accurate measure of the displacement is recorded.

More generally, the sample is caused to occupy a plurality of analysis positions during execution of the method 400. Each analysis position may correspond to analysis of the sample by one or more of the instruments. Thus, in some experimental setups, the sample may remain in a fixed position, and the plurality of instruments may be moveable such that repeated motion of the plurality of instruments causes the sample to occupy, in sequence, each one of the plurality of analysis positions. In other experimental setups, both the sample and one or more of the instruments may be moveable, such that movement of the sample and/or of at least one instrument causes the sample to occupy each of the plurality of analysis positions. Accordingly, the step 402 comprises causing the sample to occupy a first analysis position or, if entered from step 408, causing the sample to occupy a subsequent analysis position.

Step 404 of the method 400 comprises, in many experimental setups, referencing the orientation of the sample, on or at the instrument to which the sample has been moved, relative to the fixed global coordinate system of the ensemble, relative to a controlled, instrument-specific local coordinate system and, possibly, relative to a laboratory coordinate system. In other experimental setups in which the sample remains in a fixed position, the step 404 comprises referencing the position and or orientation of an instrument relative to a fixed global coordinate system. Preferably, the global reference coordinate system and the local instrument-related coordinate system are continuously monitored throughout the entire method in order to take account of any alterations, distortions or other movements of the coordinate systems relative to one another or relative to a laboratory coordinate system.

If a continuous stream of sample material is provided to a multi-point multi-analysis sample characterization system of the type depicted in FIG. 1 as system 100, then the sample may be only a small portion or segment of a larger sample-bearing object. For example, with reference to FIGS. 1-2, each sample that is analyzed, in succession, by the analysis apparatuses 105(1) through 105(n) is merely a portion, generally a portion of a surface, of an encompassing core sample 102. In such a situation, it is convenient to define a coordinate system that is referenced to the core sample 102, that extends along at least a portion of the length of the core sample and that moves with the core sample. Accordingly, the metrological apparatus or sensor, the $k^{th}$ analysis apparatus that generates the base data, may beneficially generate a record of locations and features that are indirectly referenced to the moving core-sample reference frame or, more-generally, to a moving sample-stream reference frame. It should be noted that coordinates from the metrological apparatus or sensor are given in its local coordinate system, this latter being referenced with respect to the global reference system, through embedded gyroscopes for instance. The moving sample-related frame is also referenced with respect to the global system, so the connection is indirectly made through the global system.

Any change in orientation of a moving sample relative to the global coordinate system of the ensemble or to a moving sample-stream reference frame during transit of the sample to the instrument should be recorded, thereby establishing the rigid motion transfer matrix,

$$\mathcal{T}_{(i)}^{(j' \to j)}$$

at time $t_i$ from the local reference frame of the instrument of index $j'$ from which the sample has been transported or from the global reference frame in the *case $j'$* = 0, to the local reference frame of the instrument of index $j$ on which the sample is being analyzed or to the global reference frame in the case $j$ = 0. Alternatively, any change in orientation of a moving instrument relative to a global laboratory reference frame should be recorded in order to establish the rigid motion transfer matrix,

$$\mathcal{T}_{(i)}^{(j' \to j)}.$$

Such orientation changes include not only rotations of the sample or instrument relative to the global reference frame of the ensemble but may also include situations in which detectors of different analysis apparatuses have different respective "viewing" angles of the sample, relative to the global reference frame. Further, any movements of the sample within the apparatus relative to the apparatus-specific local coordinate system (for instance, if the sample is disposed within a sample holder on a moveable stage of the apparatus) should also be recorded. Such latter records establish the values of the coordinates matrix,

$$\underline{X}_{(i)}^{(j)},$$

at any time, $t_i$, and its changes,

$$\mathcal{T}_{(i \to i')}^{(j)} \, \underline{X}_{(i)}^{(j)}$$

relative to the $j^{\text{th}}$ instrument's local coordinate system or relative to the global reference frame of coordinates (in the case $j$ = 0).

For purposes of numerical convenience, it is equivalently possible to apply the conjugate transpose operation to both the coordinates matrix $X_{(i)}^{(j)},$ and to the rigid motion transfer matrix

$$\mathcal{T}_{(i \to i')}^{(j)}$$

prior to determining the above-noted coordinate changes

$$\mathcal{T}_{(i \to i')}^{(j)} \underline{X}_{(i)}^{(j)}$$

relative to the $j^{\text{th}}$ instrument's local coordinate system or relative to the global reference frame of coordinates (in the case $j$ = 0). These transpose operations yield, respectively, the conjugate transpose coordinates matrix, denoted as

$$\mathcal{X}_{(i)}^{(j)} = \left( X_{(i)}^{(j)} \right)^{*},$$

whose columns are the complex conjugate rows of the coordinate matrix $X_{(i)}^{(j)}$ and vice versa, and the conjugate transpose rigid motion transfer matrix, denoted as

$$\mathcal{T}_{(i \to i')}^{(j)} = \left( \mathcal{T}_{(i \to i')}^{(j)} \right)^{*},$$

whose columns are the complex conjugate rows of the rigid motion transfer matrix

$$\mathcal{T}^{(j)}_{(i \to i')}$$

and vice versa. The expression for the change of coordinates then becomes:

$$\mathcal{T}^{(j)}_{(i \to i')} \underline{X}^{(j)}_{(i)} = \left( \left( X^{(j)}_{(i)} \right)^* \left( \mathcal{T}^{(j)}_{(i \to i')} \right)^* \right)^* = \left( \mathcal{X}^{(j)}_{(i)} \mathcal{T}^{(j)}_{(i \to i')} \right)^* \qquad \text{Eq. 4}$$

Similarly, such conjugate transpose operations can be applied with either rigid motion transfer matrix within the brackets in Eq. 2.

The apparatus-specific local coordinate system should include at least one fixed point (e.g., the origin of the coordinate system) and at least two axes (for a two-dimensional map of sample locations) or at least three axes (for a three-dimensional map). In general, the coordinate system is three dimensional even in particular cases of plane rotations where the third coordinate may be simply set at a fixed value. In the two-dimensional case, one of the two axes may be a rotational axis. In the three-dimensional case, two of or all three of the axes may be rotational axes. If a flat surface of the sample is being analyzed and is maintained in a known fixed position (e.g., horizontal) during the analysis, then, at a minimum, at least two distinguishable points on the sample surface should be referenced by the local coordinate system so that the position and orientation of the sample within its sample holder may be reliably known. If the sample is to be moved during the course of an analysis, such as when the sample is translated or rotated to bring different areas of the sample into position for analysis, then the at least two distinguishable points establish only an initial orientation of the sample. In order to further record the position and orientation of the sample during the course of the movements, the degree of motion along any translational axis or any rotational axis (e.g., of a sample holder) should also be recorded. In some instances, the sample orientation may be fixed by the configuration of a sample holder.

After having been placed in position for analysis in an instrument, the sample is analyzed in step 406 of the method 400 (FIG. 4). Depending on the type of instrument and the requirements of the experiment, the analysis may comprise investigation of a single spot or restricted area on or of the sample or a survey scan of a plurality of discrete points or areas on or of the sample. If the instrument includes a moveable platform on which the sample is mounted, such as a translation stage or a rotation stage, then the analyses of the plurality of discrete points or areas may be facilitated by movement of the platform by known distances or angles. The data from the analyses, if plural, may be recorded as separate data for each analyzed point or area. Alternatively, the data from the plural analyses may be consolidated into an average value or values. The collection of analytical data at each sampled location is represented by the instrumental function, $\varphi_j$, which associates each point in the coordinate system that is analyzed by the $j$th instrument with an array of scalar values (e.g., a vector or, more generally, a matrix or a tensor) that represents the acquired data as well as, possibly, various instrumental parameters and/or settings.

Step 408 of the method 400 is a decision step. If, as evaluated in step 408, there are further analyses to be conducted upon the sample by additional instruments, then execution of the method returns to step 402 via the "Y" (i.e., "Yes") branch of step 408, thus causing the steps 402-406 to be repeated. The repetition of the steps 402-406 continues until all necessary analyses have been completed. In many instances, the steps 402-406 are repeated until the sample has been analyzed one time by each of the instruments in the experimental setup. It is also possible to continue execution of the method 400, with a new iteration of the steps 402-406, after causing the sample to re-occupy one or more of the analysis positions in order to conduct further analysis. This may happen, for example, if an initial set of analyses of the sample implies that a new region should be analyzed. At least one of the instruments (indexed herein as the $k$th instrument) is a metrological apparatus or sensor, as noted above, which creates a map of the sample that is subsequently used as base data to which all of the other data are projected.

Once all necessary analyses have been completed, the "N" (i.e., "No") branch, leading to execution of steps 409 and 410, is executed. In optional step 409, all of the various rigid-motion transfer matrices,

$$\mathcal{T}^{(j)}_{(i \to i')}$$

and

$$\mathcal{T}_{(i)}^{(j'\to j)},$$

for all values of $i$, $i'$, $j$ and $j'$, as established in the various executions of step 404, are stored within a data file relating to the experiment. The data file may be stored locally to the experimental system or, additionally or alternatively, may be stored on a database server by communication of the data over a network connection, such as a connection to a local area network or to the Internet. In step 410, all of the various composite transformation matrices, each such composite transformation matrix being given by the expression in brackets in Eq. 2, are calculated for each index $j$ ($1 \leq j \leq n$; and $j \neq k$, where $k$ is the index of a metrological apparatus or sensor). Optionally, the conjugate transpose matrix of each such composite transformation matrix can be calculated. Additionally, the matrix inverse of the matrix given in brackets in Eq. 2 may also be calculated. These calculations are performed using the collection of rigid-motion transfer matrices,

$$\mathcal{T}_{(i\to i')}^{(j)}$$

and

$$\mathcal{T}_{(i)}^{(j\to j')}$$

as well as the relationships given in Eqs. 1a-b and Eqs. 3a-b. The results of the calculations performed in step 410 yield a framework for subsequently (in step 412) identifying, within each individual data set $D_j$, the experimental results corresponding to each identified feature of interest on or of the sample.

In a modified version of the method 400, one or both of the steps 409 and 410 may be moved, within the sequence of steps, to a position prior to step 408, within the loop of steps bounded by step 402 and 408. According to this modified method, some of the rigid-motion transfer matrices,

$$\mathcal{T}_{(i\to i')}^{(j)}$$

and

$$\mathcal{T}_{(i)}^{(j'\to j)}$$

and other quantities described above are calculated and optionally stored during each iteration of the loop as the information required for their calculation becomes available.

Finally, in step 412, features on or of the sample are chosen for further experimental, mathematical or other logical analysis. In some instances, the features may be chosen randomly such as, for instance, to gain an understanding of an average property of the sample. Alternatively, features of interest may be identified by study of one or more of the local data sets. For example, if a local data comprises digitized photographic information of the sample generated by a conventional RGB camera, a feature of interest may comprise a particular unidentified mineral grain or a region of unusual color. Alternatively, if the local data set comprises spectroscopic data, a feature of interest may comprise a region of the sample having spectral characteristics that do not match those of the surroundings (as may be noted investigation of random locations). These example methods of identifying features of interest are not exhaustive; other methods of identifying features of interest are also possible, depending on the requirements of a user. Step 412 further comprises fusion of the data pertaining to each randomly chosen location or feature of interest on or of the sample. The data fusion comprises consolidation of the data in all of the instrument-specific data sets ($D_1$, $D_2$, ..., $D_n$) relating to the location or feature, as collected by all of the instruments. This may be accomplished by:

- identifying the local coordinates, $\underline{X}_{(j)}^{(j)}$, of the location or feature in each of the instrument-specific data sets (e.g., see FIG. 3);

- applying the respective instrumental function, $\varphi_j(\underline{X}^{(j)}_{(j)})$, that pertains to the identified local coordinate within each data set, thereby associating each identified coordinate with a respective data array (e.g., a vector, such as the vectors $\mathbf{d}_1$, $\mathbf{d}_2$, ..., $\mathbf{d}_n$ illustrated in FIG. 3) here referred to as a data segment; and
- consolidating the various data segments into a single fused data array, generally a composite data vector, that represents all of the collected information pertaining to the respective location or feature of interest.

Step 412 may include normalization of the data within each data segment, thereby facilitating comparison with data of other experiments. Also, the step 412 may include weighting the data of each segment, relative to other segments, in order to give greater weight to data of instruments having higher reliability, accuracy, resolution, etc. The fused data may then be employed in high-level studies such as those that investigate trends or variations within a sample or across a plurality of samples, comparisons to tabulated databases, etc.

In a fully automated system, such as the system 100 shown in FIG. 1, that has a robotic control of sample positioning and a computer or other controller that is electronically coupled to robotic control system as well as to the various instruments, the steps of the method 400 may be executed automatically. If a continuous stream of sample material is provided, as indicated in FIG. 1, the mathematical calculations described above may be executed in real time such that a fused data set is generated for each portion of the sample stream just after the final analysis of that sample portion is completed. A graphical depiction of the variation of the fused data sets with time may be stored and/or provided to a human operator in real time. Alternatively, the fused data may be input to artificial intelligence software in real time, thereby facilitating rapid identification of any interesting physicochemical discontinuities or trends in the sample stream. The human operator or artificial intelligence software may then recommend subsequent actions to be taken, based on the analyses and/or visualization of the fused data.

Example

For purposes of example, a highly simplified instance of the system 100 shown in FIG. 1 is considered that includes only two analysis apparatuses 105a, 105d. In this example, it is assumed that analysis apparatus 105a is a metrological apparatus or sensor (denoted as apparatus "S1" in the following discussion) and that analysis apparatus 105d is a one-dimensional camera (denoted as apparatus "S2" in the following discussion). As discussed above with regard to FIG. 1, it is assumed that the two apparatuses perform sequential analyses of a core 102 placed on or in a sample holder 104 (denoted as "SH" in the following discussion) that is conveyed along a rectilinear axis of translation on a conveyor belt 101.

In the present example, the apparatuses S1 and S2, together with the sample holder SH comprise an ensemble of apparatuses for which an ensemble-related, global coordinate frame of reference, $Б^{global}$, is defined during the course of the experiment. Also, each apparatus S1, S2 is assigned with a local coordinate frame

$$Б^{(S1)}_t$$

and

$$Б^{(S2)}_t,$$

respectively. In more general systems comprising a total of $N_a$ analysis apparatuses, there may be a plurality of local coordinate reference frames,

$$Б^{(Si)}_t,$$

where $1 \le i \le N_a$. Each local coordinate frame is monitored in time with respect to the experiment frame, $Б^{global}$, by various passive metrological apparatuses, which, for purposes of this example, are assumed to be gyroscopes. The sample is defined within the local coordinate frame of the sample holder,

$$\mathbb{b}_t^{(SH)},$$

that is likewise monitored in time with respect to the experiment frame $\mathbb{b}^{global}$. Moreover, the experiment reference frame, $\mathbb{b}^{global}$, is itself monitored in time with respect to a laboratory reference frame, $\mathbb{b}^{lab}$. In this example, both the experiment and laboratory reference frames are assumed to be constant. Motion of the sample during the experiment generates a (*Y-t*) position-time record in the experiment frame $\mathbb{b}^{global}$. Specifically, the direction of sample motion shown in FIG. 1 is taken as the *Y*-axis. Three-dimensional Euler rotation matrices are used to write the coordinates transformations.

In order to correlate data between the apparatuses S1 and S2, rotations are calculated such that the spatial origins of the S1 and S2 frames are brought to that of the mobile SH frame, as discussed further below. It is noted, however, that each rotated frame of reference can be described as a 3D rotation of the experiment frame. For example, at time *t,* the reference frame of the sample holder,

$$\mathbb{b}_t^{(SH)},$$

can be described in terms of three rotation angles $\left(\alpha_x^{(SH)}(t), \alpha_y^{(SH)}(t), \alpha_z^{(SH)}(t)\right).$

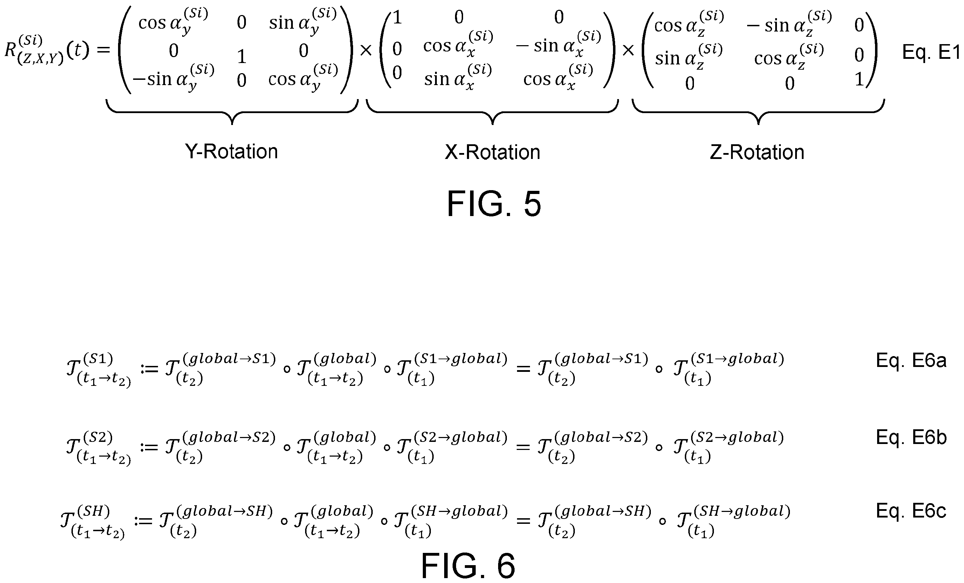

With regard to rotational frame transformations, several three-dimensional descriptions are possible. For purposes of this example, the convention of intrinsic Tait-Bryan Euler angles (P. B. DAVENPORT. "Rotations about nonorthogonal axes." AIAA Journal, Vol. 11, No. 6 (1973), pp. 853-857) is employed. Under this convention, an active rotation matrix, $R_{(Z,X,Y)}^{(Si)}(t),$ the form of which is given by Eq. E1 (see the accompanying FIG. 5), characterizes the rotation of the frames S1 and S2 around the moving axes with respective angles $\left(\alpha_z^{(Si)}(t), \alpha_x^{(Si)}(t), \alpha_y^{(Si)}(t),\right)$ (*i*= 1, 2) with respect to the experiment frame. The form of Eq. E1 assumes that rotations about the axes are taken in the order (Z, X, and Y).

Let the rotation of axes, with respect to the experiment frame, of the metrological sensor be chosen in the order (Z, Y, and X). Also, let the rotation of axes, with respect to the experiment frame, of the one-dimensional camera, S2, be chosen in the order (Z, X, and Y). Further, let the rotation of axes, with respect to the experiment frame, of the sample holder, SH, be chosen in the order (Z, X, and Y). Using these choices, it is possible to construct coordinate transform matrices between different frames at a constant time, $t_1$. The transformation from the S1 frame to the experiment frame at time, $t_1$, is given by the following Eq. E2:

$$\mathcal{T}_{(t_1)}^{(S1 \rightarrow global)} := R_{(Z,Y,X)}^{(S1)}(t_1) \qquad\qquad \text{Eq. E2}$$

Similarly, the transformation from the S2 frame to the experiment frame at time $t_2$ is given by Eq. E3, as follows:

$$\mathcal{T}_{(t_2)}^{(S2 \rightarrow global)} := R_{(Z,X,Y)}^{(S2)}(t_2) \qquad\qquad \text{Eq. E3}$$

Similarly, the transformation from the SH frame to the experiment frame at time, *t*, is given by Eq. E4, as follows:

$$\mathcal{T}_{(t)}^{(SH \rightarrow global)} := R_{(Z,X,Y)}^{(SH)}(t) \qquad\qquad \text{Eq. E4}$$

From the definitions given in Eqs. E2, E3 and E4, the rotational coordinate transformations

$$\mathcal{T}_{(t_1)}^{(S1 \to SH)}$$

and

$$\mathcal{T}_{(t_2)}^{(SH \to S2)}$$

may be constructed as noted in Eqs. E5a and E5b, respectively:

$$\mathcal{T}_{(t_1)}^{(S1 \to SH)} = \mathcal{T}_{(t_1)}^{(global \to SH)} \circ \mathcal{T}_{(t_1)}^{(S1 \to global)} \qquad \text{Eq. E5a}$$

$$\mathcal{T}_{(t_2)}^{(SH \to S2)} = \mathcal{T}_{(t_2)}^{(global \to S2)} \circ \mathcal{T}_{(t_2)}^{(SH \to global)} \qquad \text{Eq. E5b}$$

Coordinate transformation matrices between different times for the same frame are constructed similarly and are listed in Eqs. E6a-E6c in the accompanying FIG. 6. Specifically, Eq. E6a describes the transformation of the analysis apparatus (S1) frame of reference from time $t_1$ to time $t_2$. Likewise, Eq. E6b and Eq. E6c respectively describe the transformation of the analysis apparatus (S2) frame of reference and the sample holder (SH) frame of reference between these same time periods. Each of these coordinate transformations include any rotations occurring, respectively, at time $t_1$ and at time $t_2$. They also include a term for the coordinate transformation of the global reference frame between time $t_1$ and at time $t_2$, which is just the identity function in each case.

Using the above-noted definitions and relationships between coordinate transformations, a set of coordinate vectors of points of the sample, initially expressed in the S1 frame of reference at time $t_1$, can be expressed in the S2 frame of reference at time, $t_2$. Let the coordinate vector, for each of a total of p points on the sample, as expressed in the S1 frame at $t_1$, be defined by Eq. E7, as follows:

$$\left( \underline{X}_{t_1}^{(S1)} \right)_i = \begin{pmatrix} x_i(t_1) \\ y_i(t_1) \\ z_i(t_1) \end{pmatrix}_i^{(S1)} \qquad 1 \le i \le p \qquad \text{Eq. E7}$$

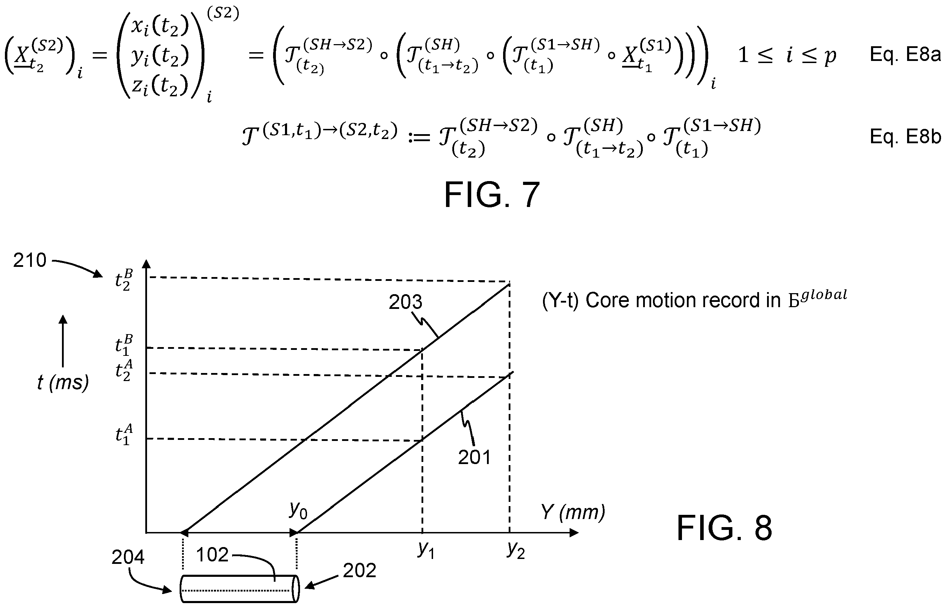

These vectors can then be expressed in the S2 frame of reference at $t_2$ using Eq. E8a, which is given in the accompanying FIG. 7. Accordingly, it is possible to define the operator, $\mathcal{T}^{(S1,t_1) \to (S2,t_2)}$, of coordinate transformation from the S1 frame of reference at time, $t_1$, to the S2 frame of reference at time, $t_2$, as given by Eq. E8b of FIG. 7. Note that this operator, which is just the expression in parentheses in Eq. E8a without the vector, describes the following sequence of mappings:

$$\underline{X}_{t_1}^{(S1)} \mapsto \underline{X}_{t_1}^{(SH)} \mapsto \underline{X}_{t_2}^{(SH)} \mapsto \underline{X}_{t_2}^{(S2)} \qquad \text{E9}$$

Timestamps, as used in the above equations, are generated from the time-versus-position motion record of the sample holder, which is developed over the length of the core sample. For instance, FIG. 8 is a graph 210 showing separate plots 201, 203, of time versus position of a leading edge 202 and a trailing edge 204, respectively, of a geological core 102, as it moves through an analysis system similar to the system 100 that is depicted in FIG. 1. In this graph, $y_0$, $y_1$ and $y_2$ are the loading position of the leading edge, the scan position of analytical apparatus S1 and the scan position of analytical apparatus S2, respectively, on the one-dimensional conveyor 101. The construction of the plots of FIG. 8 assumes that the linear velocity, v, of the conveyor 101 is constant and, thus, the plots 201, 203 are both lines having slope, 1/v. In general practice, however, the linear motion of the conveyor is monitored in order to maintain an accurate record of the position and velocity of the sample at all times.

From FIG. 8, the core's leading edge 202 is in the field of view of analytical apparatus S1 at time $t_1^A$ and is in the field of view of analytical apparatus S2 at time $t_2^A$. Likewise, the core's trailing edge 204 is in the field of view of apparatus S1 and the field of view of apparatus S2 at time $t_1^B$ and time $t_2^B$, respectively. Each observable material point, M, on the surface of the core 102 corresponds to a separate respective time-versus-position line (not shown) on the graph 210 that has the same slope as and is disposed between the plots 201 and 203. Thus, each such point, M, corresponds to a pair of time values $(t_1^M, t_2^M)$ that record its presence in the field of view of analytical apparatuses S1 and S2 respectively.

As described above, instrumental functions and fusion operators are also required in order to fully characterize analytical data sets that are acquired in accordance with the present teachings. Specifically, a respective instrumental function, $\varphi_i$, is defined for each $i^{th}$ analytical apparatus, Si (e.g., apparatuses S1 and S2), that generates data from a sample placed in its field of view. The instrumental function of the metrological sensor S1, which produces a topological characterization in metric units of the sample in the S1 frame of reference, is a special case. In this special case, the instrumental function of the metrological sensor S1 is simply multiplication of each data point by the number 1 and the corresponding operator is the identity operator. In the case of the one-dimensional camera S2, that produces data stripes at constant timestamps, the instrumental operator has, for its input, a set of points from the sample, expressed in the S2 frame and provides, as its output, the different data layers D2 of spectral intensity, as is schematically depicted in FIG. 2.

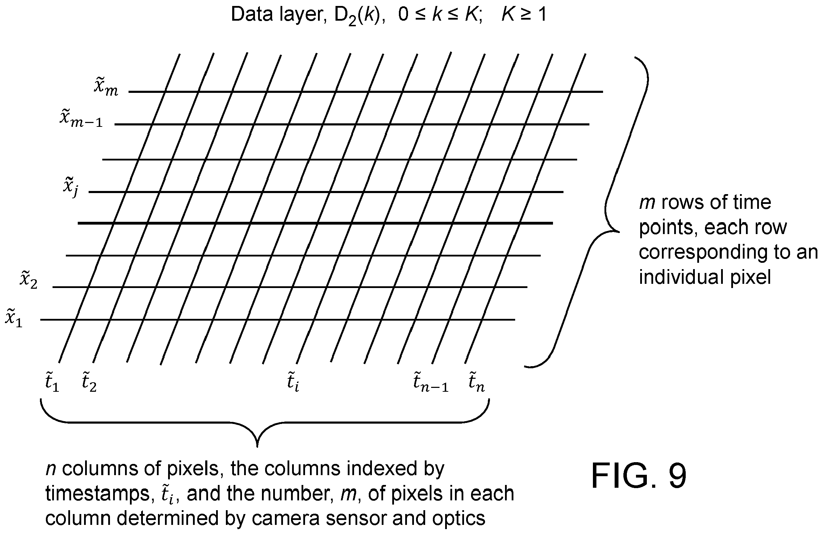

FIG. 9 is a schematic depiction of one hypothetical layer of data, layer D2(k), as may be obtained by the one-dimensional camera, apparatus S2. In general, any analytical apparatus may generate data comprising any total number, K, of such data layers, where $K \geq 1$ and where $0 \leq k \leq K$, depending upon the type of and capabilities of the analytical apparatus. For instance, with regard to the present example of a one-dimensional camera, different layers may correspond to light detected at different respective wavelengths of light if the camera comprises either wavelength dispersing or wavelength filtering optics. In contrast to the metrological sensor, the data of which relates directly to spatial coordinates, the natural coordinate frame of each layer of the one-dimensional camera comprises the dimensions of "time" and "pixels". Accordingly, as schematically depicted in FIG. 9, the full set of measurements within one data layer obtained from core 102 may comprise a set of n columns indexed by timestamps, $\tilde{t}_i$, $(1 \leq i \leq n)$, where each column comprises a total of m pixels and where the pixels are indexed by rows, $\tilde{x}_j$, where $(1 \leq j \leq m)$.

The purpose of the instrumental function, $\varphi_2$, of the analytical apparatus S2 is to allow one to relate metrological data of the sample, that is derived from S1, to the corresponding spectral data from S2. The instrumental function is defined as an operator having for input a set of points from the sample, expressed in the S2 frame, and giving, as output, the different data layers D2 of spectral intensity. Thus, the instrumental function of S2 at any time, t, may be defined as follows:

$$\varphi_{2_t} : \underline{X}_t^{(S2)} \mapsto \left( D_2^{(S2)} \right)_t \qquad \text{Eq. E10a}$$

The instrumental function enables the construction, for all sample points, M, being analyzed by S1, of a mapping, $\mathcal{F}_{S1 \to S2}$, of the form:

$$\mathcal{F}_{S1 \to S2} : \underline{X}_{t_1^M}^{(S1)} \mapsto \left( D_2^{(S2)} \right)_{t_2^M} \qquad \text{Eq. E10b}$$

From the former definitions, the mapping, $\mathcal{F}$, for this example is explicitly the composition of $\varphi_{t2M}$ with

$$\mathcal{T}^{\left( S1, t_1^M \right) \to \left( S2, t_2^M \right)}$$

as given by Eq. E11, below:

$$\mathcal{F}_{S1 \to S2} = (\varphi_2)_{t_2^{\mathrm{M}}} \circ \mathcal{T}^{(S1, t_1^{\mathrm{M}}) \to (S2, t_2^{\mathrm{M}})} \qquad\qquad \text{Eq. E11}$$

The mapping $\mathcal{F}_{S1 \to S2}$ is denoted as the data fusion operator relating data from analytical apparatus S1 to that from analytical apparatus S2.

The explicit construction of an explicit instrumental function, $\varphi_{2_t}$, relating to any particular analytical apparatus depends on the physical construction and mode of operation of the apparatus. In the present example, it is assumed that the output of the one-dimensional camera, S2, is a single two-dimensional layer comprising $n$ columns, each column corresponding to a respective timestamp and comprising $m$ pixels. The purpose of the instrumental function, in this example, is to assign, to each observed material point (X,Y,Z) of the sample, time and pixel coordinates, $(i,j)$ from the data set D2. As discussed above with reference to FIG. 9, columns indices, i, are obtained from the projection of data timestamps onto the ($Y$-$t$) motion record of the sample holder. Thus, for each Y coordinate of a sample point in the S2 frame, a unique column index may be readily assigned.

The assignment of pixel index, $j$, during the construction of the instrumental function for S2 depends upon the physical configuration of the camera as well as well-known optical principles. For example, in some instances, the one-dimensional camera may be modeled as a simple pinhole camera. In general, the parameters that need to be considered include: height of the camera above the surface of the sample, the x-axis value of the center of the camera (see FIG. 1 for coordinate axes orientation), the viewing angle of the camera relative to the axes, pixel pitch, the focal length of light collection optics, and depth of field or numerical aperture of the collection optics. Using values for these parameters, a formula may be developed to calculate the pixel number at which the image of any point in the one-dimensional field of view is projected.

The discussion included in this application is intended to serve as a basic description. Although the present invention has been described in accordance with the various embodiments shown and described, one of ordinary skill in the art should be aware that the specific discussion may not explicitly describe all embodiments possible; many alternative modifications are implicit.

## Claims

1. A method of sample analysis comprising:

   causing a sample to occupy, in sequence, each of a plurality of analysis positions, each of which is a position at which a respective analysis apparatus is configured to analyze the sample, wherein one of the analysis apparatuses comprises a metrological apparatus or sensor;
   with the sample at each analysis position of the plurality of analysis positions:

      determining at least one rigid transfer matrix that describes a transport motion to the analysis position from a prior analysis position or from an initial sample position;
      generating an analysis data set derived by conducting an analysis of a plurality of locations on or of the sample using the analysis apparatus that corresponds to the analysis position, the analysis data set comprising a respective array of scalar values corresponding to each one of the analyzed locations;

   using the rigid transfer matrices, calculating a plurality of composite transformation matrices, each composite transformation matrix effecting, by matrix multiplication, the expression of sample coordinates as determined by the metrological apparatus or sensor in the local coordinate system of a respective one of the other analysis apparatuses;
   within each data set, mapping local apparatus-specific coordinates of a feature on the sample to data in said data set that corresponds to the feature; and
   constructing a composite data set comprising all of the arrays of scalar values corresponding to the plurality of mapped local apparatus-specific coordinates that correspond to the feature.

2. A method as recited in claim 1, wherein the metrological apparatus or sensor comprises a profilometer.

3. A method as recited in claim 2, wherein the profilometer comprises a one-dimensional line-scanning camera.

4. A method as recited in any preceding claim, wherein the step of causing the sample to occupy the plurality of analysis positions is performed by a continuous movement of the sample by a linear conveyance apparatus.

5. A method as recited in claim 4, wherein the sample is a portion of a continuous stream of sample material that is moved, in sequence, into the plurality of analysis positions by the linear conveyance apparatus.

6. A method as recited in claim 5, wherein the profilometer is configured to generate coordinates of the sample that are referenced to the moving stream of sample material.

7. A method as recited in any preceding claim, further comprising comparing the composite data set to a similarly derived composite data set corresponding to a second feature on or of the sample.

8. A method as recited in any one of claims 1-6, further comprising comparing the composite data set to entries in a database of similarly-derived composite data sets.

9. A method as recited in any preceding claim, wherein the step of causing the sample to occupy a plurality of analysis positions comprises moving the sample into position for analysis by one or more of the group consisting of: a red-green-blue (RGB) camera that detects visible light, a visible and near-infrared camera that detects light wavelengths between approximately 400 and 1000 nanometers, a visible and near-infrared spectrometer that detects light wavelengths between approximately 400 and 1000 nanometers, a short wave infrared camera that detects light wavelengths between approximately 920 and 3000 nanometers, and a short wave infrared spectrometer that detects light wavelengths between approximately 920 and 3000 na nometers.

10. A method as recited in any preceding claim, wherein the step of causing the sample to occupy a plurality of analysis positions comprises causing the sample to occupy a position for analysis by one or more of the group consisting of: a Raman spectrometer and a laser-induced breakdown spectroscopy spectrometer.

11. A method as recited in any preceding claim, wherein the step of causing the sample to occupy a plurality of analysis positions comprises causing the sample to occupy a position for analysis by one or more of the group consisting of: an X-ray diffraction (XRD) spectrometer; and an X-ray fluorescence (XRF) spectrometer.

12. A method as recited in claim 4, wherein the step of causing the sample to occupy a plurality of analysis positions comprises moving the sample away from the linear conveyance apparatus and into a mobile laboratory for analysis therein.

13. A method as recited in claim 12, wherein the moving of the sample into the mobile laboratory for analysis comprises moving the sample into position for X-ray diffraction analysis and/or X-ray fluorescence analysis.

FIG. 1

FIG. 2

FIG. 3

400

402

Move Sample and/or Apparatus

404

Determine Coordinate
Transformations

406

Analyze Sample

408

More
Instruments
?

Y

N

409

Optional: Store
Transformation Matrices

410

Calculate Composite
Transformation Matrices

412

Fuse Data for Each
Feature of Interest

FIG. 4

$$R_{(Z,X,Y)}^{(Si)}(t) = \underbrace{\begin{pmatrix} \cos\alpha_y^{(Si)} & 0 & \sin\alpha_y^{(Si)} \\ 0 & 1 & 0 \\ -\sin\alpha_y^{(Si)} & 0 & \cos\alpha_y^{(Si)} \end{pmatrix}}_{\text{Y-Rotation}} \times \underbrace{\begin{pmatrix} 1 & 0 & 0 \\ 0 & \cos\alpha_x^{(Si)} & -\sin\alpha_x^{(Si)} \\ 0 & \sin\alpha_x^{(Si)} & \cos\alpha_x^{(Si)} \end{pmatrix}}_{\text{X-Rotation}} \times \underbrace{\begin{pmatrix} \cos\alpha_z^{(Si)} & -\sin\alpha_z^{(Si)} & 0 \\ \sin\alpha_z^{(Si)} & \cos\alpha_z^{(Si)} & 0 \\ 0 & 0 & 1 \end{pmatrix}}_{\text{Z-Rotation}} \quad \text{Eq. E1}$$

$$\text{FIG. 5}$$

$$\mathcal{T}_{(t_1 \to t_2)}^{(S1)} := \mathcal{T}_{(t_2)}^{(global \to S1)} \circ \mathcal{T}_{(t_1 \to t_2)}^{(global)} \circ \mathcal{T}_{(t_1)}^{(S1 \to global)} = \mathcal{T}_{(t_2)}^{(global \to S1)} \circ \mathcal{T}_{(t_1)}^{(S1 \to global)} \qquad \text{Eq. E6a}$$

$$\mathcal{T}_{(t_1 \to t_2)}^{(S2)} := \mathcal{T}_{(t_2)}^{(global \to S2)} \circ \mathcal{T}_{(t_1 \to t_2)}^{(global)} \circ \mathcal{T}_{(t_1)}^{(S2 \to global)} = \mathcal{T}_{(t_2)}^{(global \to S2)} \circ \mathcal{T}_{(t_1)}^{(S2 \to global)} \qquad \text{Eq. E6b}$$

$$\mathcal{T}_{(t_1 \to t_2)}^{(SH)} := \mathcal{T}_{(t_2)}^{(global \to SH)} \circ \mathcal{T}_{(t_1 \to t_2)}^{(global)} \circ \mathcal{T}_{(t_1)}^{(SH \to global)} = \mathcal{T}_{(t_2)}^{(global \to SH)} \circ \mathcal{T}_{(t_1)}^{(SH \to global)} \qquad \text{Eq. E6c}$$

$$\text{FIG. 6}$$

$$\left(\underline{X}_{t_2}^{(S2)}\right)_i = \begin{pmatrix} x_i(t_2) \\ y_i(t_2) \\ z_i(t_2) \end{pmatrix}_i^{(S2)} = \left(\mathcal{T}_{(t_2)}^{(SH\rightarrow S2)} \circ \left(\mathcal{T}_{(t_1\rightarrow t_2)}^{(SH)} \circ \left(\mathcal{T}_{(t_1)}^{(S1\rightarrow SH)} \circ \underline{X}_{t_1}^{(S1)}\right)\right)\right)_i \quad 1 \leq i \leq p \qquad \text{Eq. E8a}$$

$$\mathcal{T}^{(S1,t_1)\rightarrow(S2,t_2)} := \mathcal{T}_{(t_2)}^{(SH\rightarrow S2)} \circ \mathcal{T}_{(t_1\rightarrow t_2)}^{(SH)} \circ \mathcal{T}_{(t_1)}^{(S1\rightarrow SH)} \qquad \text{Eq. E8b}$$

## FIG. 7

FIG. 8

EP 4 019 949 A1

Data layer, $D_2(k)$, $0 \leq k \leq K$; $K \geq 1$

$\tilde{x}_m$
$\tilde{x}_{m-1}$
$\tilde{x}_j$
$\tilde{x}_2$
$\tilde{x}_1$

$\tilde{t}_1$ $\tilde{t}_2$ $\tilde{t}_i$ $\tilde{t}_{n-1}$ $\tilde{t}_n$

$m$ rows of time points, each row corresponding to an individual pixel

$n$ columns of pixels, the columns indexed by timestamps, $\tilde{t}_i$, and the number, $m$, of pixels in each column determined by camera sensor and optics

FIG. 9

EP 4 019 949 A1

Europäisches
Patentamt

European
Patent Office

Office européen
des brevets

# EUROPEAN SEARCH REPORT

Application Number

EP 20 30 6696

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Le Guen M ET AL: "Increasing exploration efficiency with SOLSA Expert System", , 18 September 2020 (2020-09-18), XP055810317, Retrieved from the Internet: URL:https://www.earthdoc.org/docserver/fulltext/2214-4609/2020/mineral-exploration-symposium/200628_EAGE_abstract_SOLSA_Expert_System-24-161-Le_Guen-Monique.pdf?expires=1622720875&id=id&accname=guest&checksum=D6EEE4B244671053AD398849B1A8A758 [retrieved on 2021-06-03] * the whole document * | 1-13 | INV. G01N22/00 G06F17/16 |
| X | Capar Laure ET AL: "Presentation - Determination of spectra characteristics of laterite drill-core for "on line-on site" real-time automated mineralogy detection", , 23 July 2017 (2017-07-23), pages 4485-4488, XP055810432, DOI: 10.1109/IGARSS.2017.8127997 ISBN: 978-1-5090-4951-6 Retrieved from the Internet: URL:https://4d8xuv2577wggnmowfwzehpo-wpengine.netdna-ssl.com/wp-content/uploads/2017/hyperspectral_igarss_sessions/Paper-1562-IGARSS2017-VFinal.pdf [retrieved on 2021-06-04] * pages 5-6 * | 1-13 | |

TECHNICAL FIELDS
SEARCHED (IPC)

G06F
G01N

-/--

The present search report has been drawn up for all claims

| Place of search | Date of completion of the search | Examiner |
|---|---|---|
| Berlin | 4 June 2021 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

## EUROPEAN SEARCH REPORT

Application Number

EP 20 30 6696

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GUO YONGBO ET AL: "Multi Body Dynamic Equations of Belt Conveyor and the Reasonable Starting Mode", SYMMETRY, vol. 12, no. 9, 10 September 2020 (2020-09-10), page 1489, XP055810450, DOI: 10.3390/sym12091489 * fig. 1, eq. 1-5 * ----- | 1-13 | |

TECHNICAL FIELDS SEARCHED (IPC)

The present search report has been drawn up for all claims

| Place of search | Date of completion of the search | Examiner |
|---|---|---|
| Berlin | 4 June 2021 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

31

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9618651 B
- US 8630314 B
- WO 2019213012 A1
- US 9117133 B
- US 9746559 B
- US 8736817 B
- US 9976852 B
- US 10373339 B

### Non-patent literature cited in the description

- Introduction: Ways and Means to Deal with Data from Multiple Sources. **COCCHI ; MARINA.** In Data Handling in Science and Technology. Elsevier, 2019, vol. 31, 1-26
- **LEUE, MARTIN ; CARSTEN HOFFMANN ; WILFRIED HIEROLD ; MICHAEL SOMMER.** In-situ multi-sensor characterization of soil cores along an erosion-deposition gradient. *Catena,* 2019, vol. 182, 104140
- **FAN ; SHUXIANG ; CHANGYING LI ; WENQIAN HUANG ; LIPING CHEN.** Data fusion of two hyperspectral imaging systems with complementary spectral sensing ranges for blueberry bruising detection. *Sensors,* 2018, vol. 18 (12), 4463
- Serial sectioning methods for generating 3D characterization data of grain-and precipitate-scale microstructures. **UCHIC ; MICHAEL D.** In Computational methods for microstructure-property relationships. Springer, 2011, 31-52
- **P. B. DAVENPORT.** Rotations about nonorthogonal axes. *AIAA Journal,* 1973, vol. 11 (6), 853-857